# EUROPEAN PATENT APPLICATION

(11) **EP 3 026 841 A1**
(43) Date of publication of application: **01.06.2016**
(21) Application number: 14306889.8
(22) Date of filing: 26.11.2014
(51) Int. Cl.: H04L 9/32

(54) **Digital signature calculation implementing a pre-repudiation feature**

(71) Applicant: GEMALTO SA, 92190 Meudon (FR)
(72) Inventor: Tripotin, Guennolé, 13881 Gemenos Cedex (FR); Ben Younes, Raouf, 13881 Gemenos Cedex (FR); Perticara, François, 13881 Gemenos Cedex (FR); Faher, Mourad, 13881 Gemenos Cedex (FR); Caillie, Philippe, 13881 Gemenos Cedex (FR)

(57) **Abstract**

The present invention relates to a digital signature (S) calculation method comprising a step (S1) of verification of a specific action (SA) from the signer (U), said specific action (SA) triggering the digital signature (S) calculation, said method being such that, the step (S1) of verification is able to verify at least two specific actions (SA1,SA2), one specific action (SA1) leading to a genuine straight signature ((DAT)Ks) calculation (S2), the other specific action (SA2) leading to a genuine differentiated signature ((DAT)Kds, (DAT+DV)Ks)) calculation (S3).

## Description

### FIELD OF THE INVENTION

The present invention relates to a digital signature calculation method comprising a step of verification of a specific action from the signer, said specific action triggering the digital signature calculation. Such digital calculation methods are generally implemented in two factor authentication contexts where a user has a secure device containing necessary data to calculate the signature, typically at least a pair of key dedicated to asymmetric cryptography purpose, and knows something specific (PIN etc...) enabling him/her to authenticate.

The invention also pertains to a secure device useful to implement said method.

### BACKGROUND OF THE INVENTION

The current signature calculation system enables a user to digitally sign a document or to get an error message informing that the calculation was not possible. This situation can be harmful in the case the signature is requested under constraint. The refusal of the signature calculation can lead to violence against the signatory. The single possibility for the signatory to get rid of such violence would be to calculate a right signature.

As of today, signatories issuing digital signature with smartcard have no means to prevent its validation. Once the signature is produced, agreement of the signatory cannot be canceled except through a complaint asking for the signature repudiation.

### SUMMARY OF THE INVENTION

The present invention aims at enabling a signatory to produce a genuine signature while not having necessarily the signature validated, for example for a corresponding transaction to be granted or any other situations where the validation of the signature has an effect.

The present invention is defined, in its broadest sense, as a digital signature calculation method comprising a step of verification of a specific action from the signer, said specific action triggering the digital signature calculation, said method being such that, the step of verification is able to verify at least two specific actions, one specific action leading to a genuine straight signature calculation, the other specific action leading to a genuine differentiated signature calculation.

The method proposes to use a differentiator/diversifier indicating that the act of signing has been done under pressure or in any case not willingly. It renders possible for a verifier to consider the signature as fraudulent and to repudiate it. Indeed, for any future usage of the signatures, while detecting the differentiator, a verifier (administration, sales, etc...) will invalidate the document/signature/transaction.

With the invention, the signatory produces a signature in any case. It protects him/her against repression or physical threat/injury/agression as a signature is produced anyhow while the attacker does not have any possibility to know if this signature uses or not the differentiator.

The differentiator however enables to discriminate a posteriori a valid signature done under constraint with a valid signature done with consent.

With the invention, a signatory executing a digital signature using a smartcard or using a Secure Element embedded in a device/handset is thus enabled to pre-set a repudiation of his signature by a discrete configuration at the very moment of triggering his signature by performing the corresponding specific action.

The invention enables to identify digital signature performed under pressure, threat or willful misrepresentation of a third party. The authenticity of the signature is recognized but it does not enable to validate the signing acts. With the invention the signature is authenticated but as a digital signature performed under pressure, menace, willful misrepresentation of a third party. It enables to denounce fraudulent digitally signing acts, documents, cheques, etc... Complaints for repudiation are not anymore necessary.

The method is based on the fact that, even though the signature itself is genuine, remains valid and verifiable, and provable as actually being performed by the valid person, it is nevertheless repudiated.

The invention thus offers a feature with high added value especially if properly integrated in readers. It offers an optimal trade-off between security as personal information/knowledge are requested and convenience as the solution is very user friendly. The necessary elements to implement the invention are already available in existing entities. The invention can be biometric market driven and the triggering is thus non transferable.

With the increasing development of server signing, it is here noted that the invention can be implemented in different and various kind of devices from personal secure devices to servers.

In a first embodiment, the genuine differentiated signature calculation uses a genuine differentiating private key, distinct from genuine private key used to calculate straight signature.

This first embodiment necessitates that the verifier know at least the corresponding differentiated public key to check the differentiated signature. The signature is simply calculated using the differentiated key dedicated to repudiation issue.

In a second embodiment, the genuine differentiated signature calculation uses a differentiating value incorporated in the data to be signed before signing using genuine private key used to calculate straight signature.

With this embodiment, it is necessary that the verifier stores the differentiating value or is able to retrieve it in order to be able to recognize it in the received signature and to distinguish such a genuine differentiated signature from a non authenticable signature.

Advantageously, the differentiating value is a unique pseudo-random data.

Such a data is generally personal, specific and unique pattern or information invalidating the signature if present in the cryptogram. It indeed means unambiguously that the signatory did execute this signature under constraints or unwillingly for any reason. Signature cryptograms incorporating such specific differentiating data are therefore subject to repudiation.

According to a feature of the invention, the specific action leading to a genuine differentiated signature calculation is chosen among the groups formed by: a specific biometric acquisition different to the one leading to a genuine straight signature calculation, a specific PIN, a specific validation procedure.

Such a feature establishes some preferred specific actions that can be used to distinguish a straight signature calculation request from the user from a differentiated signature calculation request. More precisely, different biometrics depending on the consent/constrained signing act can be used. Fingerprint acquisition or behaviour during the acquisition of the biometrics can be used as specific actions. It is here noted that the biometric capture device can be onboard the card or off-card. In such a last case the acquisition unit is onboard. For example the presentation of a finger instead of another one can represent unwillingly act of signing...

Specific PINs can also be used respectively for consent situation and for constrained situation. A specific validation procedure, for example two times a same validation button for constrained situation instead of one time for consent situation, can also be used.

It is here noted that several combination can also be used. For example, for a consent situation, the user will enter his/her PIN and for constraint situation he/she will push two times the validation button without entering any PIN.

The two distinguishing specific actions can be predefined or let at the choice of the signatory which could, for example, define it at the activation of the secure element. In such a case it is up to signatory imagination to find out the best personal and privacy protecting procedure.

The present invention also relates to a secure device being adapted to be connected to an acquisition unit to acquire specific actions from a user, said secure device further comprising keys and a signature calculation unit, or being able to be connected to a signature calculation unit, to implement a digital signature method according to the invention, wherein it comprises at least a differentiator to be used by the signature calculation unit in the digital signature calculation as soon as a specific action leading to a genuine differentiated signature calculation is acquired.

Such a device used in a two factor authentication context in order to perform a signature calculation enables a user to pre-repudiate his/her signature.

According to the two embodiments of the invention, the differentiator will be a genuine differentiating private key, distinct from genuine private key used to calculate straight signature or a differentiating value incorporated in the data to be signed before signing using genuine private key used to calculate straight signature.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 schematically shows the environment of the invention where a secure device of the invention is connected to an acquisition unit;
- Figure 2 is a flowchart schematically showing the calculation method of a digital signature according to the invention;
- Figure 3 is a flowchart schematically showing a verification of a digital signature as calculated using a method of the invention.

### DETAILED DESCRIPTION OF EMBODIMENTS OF THE INVENTION

For a more complete understanding of the invention, the invention will now be described in detail with reference to the accompanying drawing. The same elements have been designated with the same reference numerals in the different drawings. For clarity, only those elements and steps which are useful to the understanding of the present invention have been shown in the drawings and will be described.

The detailed description will illustrate and describe what is considered as a preferred embodiment of the invention. Any reference signs in the claims shall not be construed as limiting the scope of the invention. The wording "comprising" does not exclude other elements or steps. The wording "a" or "an" does exclude a plurality.

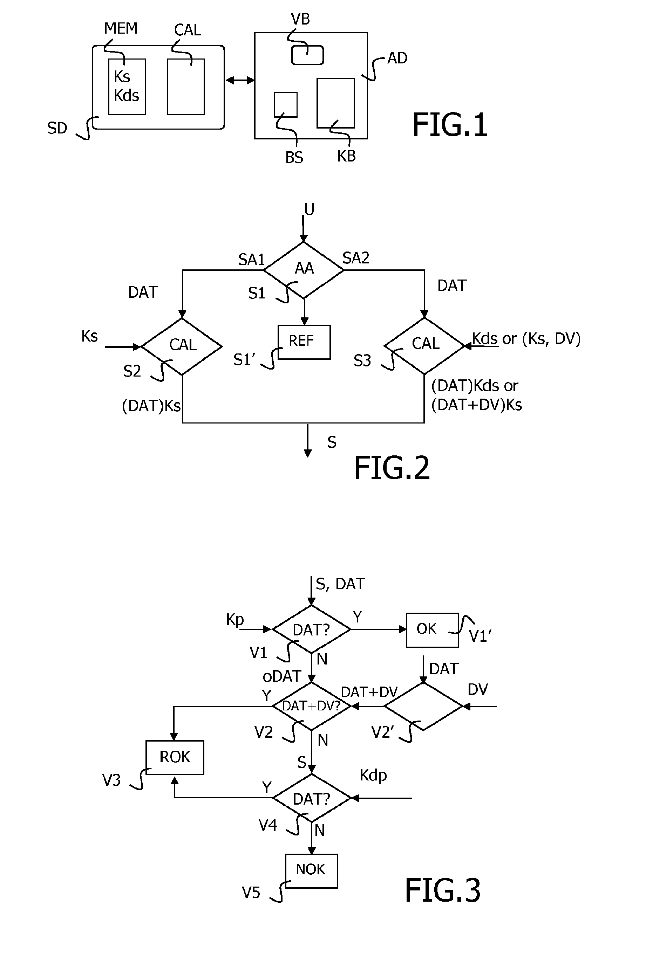

Figure 1 schematically shows the environment of the invention where a secure device SD of the invention is connected to an acquisition unit AD. It is here noted that the acquisition unit can be a device distinct from the secure device or incorporated to the secure device. The last occurs when the secure device has at least one user interface.

Indeed, wherever is the acquisition unit, for the purpose of the invention, it is necessary that the acquisition unit AD has at least one user interface in order for the user to be able to perform at least two specific actions. For example and not restrictively, the acquisition unit AD comprises a keyboard KB, a biometric sensor BS, at least a validation button etc. One or several of such user interfaces can be implemented in the acquisition unit AD.

The secure device SD includes at least one memory MEM to store keys and data to be used for cryptography purpose, and especially to calculate signatures in the scope of the invention. For the purpose of the invention, the memory MEM stores at least one straight pair of private/public key Ks/Kp and a differentiator. The differentiator can be a differentiated pair of private/public key Kds/Kdp or a differentiating value DV. Such a differentiating value DV can also be a pseudo-random value calculated on request from a dedicated algorithm shared with entities intended to check the signature. The differentiating value DV has to be personal, specific and unique. Thus associated to one user/device, the differentiating value DV enables to further check that the correct user/device has produced the signature. The differentiating value DVis advantageously a pattern or information applied or added to the data before calculation of the signature using the genuine straight private key Ks. It can also be a genuine differentiating private key depending on the embodiment.

Advantageously the secure device SD also comprises a calculation unit CAL able to use the keys and data as stored in the memory MEM to perform cryptographic calculation, including the digital signature calculation of the invention. It is here noted that the calculation unit CAL can also be carried by the acquisition unit AD in specific implementations where the secure device SD does not have enough resources to power calculation.

For example the secure device SD is a smartcard and the acquisition unit AD is a smartcard reader having a keyboard KB with validation button VB and/or a biometric sensor BS.

Figure 2 schematically shows a digital signature S calculation method according to the invention. The method of the invention starts classically by prompting a user U of the secure device SD to perform a specific action SA. Such a request enables to check that the user U is present while the signature is calculated. With the use of the secure device which is present at the moment of a transaction, it enables to reach a two factor authentication before granting the transaction.

In a first step of the invention S1, an acquired action AA of the user is obtained. This acquired action AA is compared to at least two awaited specific actions SA1 and SA2. When the acquired action does not correspond to any of the specific actions, the calculation of the signature is refused in a step S1'.

It is currently the single possibility for a user to avoid the creation of his/her genuine straight signature while under constraint. Triggering such a refusal exposes the user to violence as soon as the attacker will notice. The invention precisely avoids this.

When the acquired action performed by the user corresponds to a first specific action SA1, data DAT to be signed are sent to the calculation unit CAL to be used in a signature calculation step S2 using the straight private key Ks. A straight signature (DAT)Ks is thus obtained. This case typically corresponds to the acquisition of a correct PIN entered by the user or to the acquisition of a fingerprint of a predetermined finger on the biometric sensor BS. It can also correspond simply to one time push of the validation button VB.

When the acquired action performed by the user corresponds to a second specific action SA2, data DAT to be signed are sent to the calculation unit CAL to be used in a signature calculation step S3 using the differentiator as stored in the secure device SD.

In a first embodiment where the differentiator is a differentiated pair of keys, the differentiated private key Kds is used to calculate the signature and a differentiated signature (DAT)Kds is obtained.

In a second embodiment where the differentiator is a differentiating value DV, this differentiating value DV is applied or added to the data DAT before the calculation of a signature using the straight private key Ks. A differentiated signature (DAT+DV)Ks is thus obtained.

The signature S is then sent to a verification entity, typically by the acquisition device AD. The verification procedure is schematically shown on figure 3. For the implementation of the invention it is necessary that the verification entity knows the straight public key and the differentiator. On figure 3, the case where the signature is possibly indifferently calculated using one of the two embodiments of the invention is shown. It necessitates a check on two levels: the one corresponding to the use of a differentiated key and the one corresponding to the use of a differentiating value.

In a first step V1, the straight public key Kp is applied to the signature S and the obtained data is compared to the data DAT as classically received aside the signature S. When the obtained data are similar to data DAT (case Y) the signature is recognized as being a straight one in a step V1' and the transaction is granted.

When the obtained data are not similar to data DAT (case N), the obtained oDAT are transferred to a next step V2. In a step V2', using the stored or calculated using the shared algorithm differentiating value DV is applied or added to the received data DAT. The differentiated data DAT+DV are transmitted to step V2 in order to be compared with the obtained data oDAT.

When the obtained data oDAT are similar to the differentiated data DAT+DV (case Y), then the signature S is recognized as genuine but is repudiated ROK in a step V3. The associated transaction is not granted.

When the obtained data oDAT are not similar to the differentiated data DAT+DV (case N), the signature S as received is transmitted to a step V4. In this step the differentiated public key Kdp is applied to the signature S. If the result is similar to the data DAT (case Y), the signature S is recognized as genuine but is repudiated ROK in step V3. The associated transaction is not granted.

Repudiated cases are thus such that signature cryptogram is verified successfully but the use of the differentiator prevents the validation of the signature.

If the result is not similar to the data DAT (case N), it is not possible to verify the cryptogram. Thus, the signature is recognized as non genuine NOK. The transaction is of course rejected.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted, along with the full range of equivalents to which the claims are entitled.

## Claims

1. Digital signature (S) calculation method comprising a step (S1) of verification of a specific action (SA) from the signer (U), said specific action (SA) triggering the digital signature (S) calculation, said method being such that, the step (S1) of verification is able to verify at least two specific actions (SA1,SA2), one specific action (SA1) leading to a genuine straight signature ((DAT)Ks) calculation (S2), the other specific action (SA2) leading to a genuine differentiated signature ((DAT)Kds, (DAT+DV)Ks)) calculation (S3).

2. Digital signature (S) calculation method according to claim 1, wherein the genuine differentiated signature calculation (S3) uses a genuine differentiating private key (Kds), distinct from genuine private key (Kd) used to calculate straight signature ((DAT)Ks).

3. Digital signature (S) calculation method according to claim 1, wherein the genuine differentiated signature calculation (S3) uses a differentiating value (DV) incorporated in data (DAT) to be signed before signing using genuine private key (Ks) used to calculate straight signature ((DAT)Ks).

4. Digital signature (S) calculation method according to claim 3, wherein the differentiating value (Kds, DV) is a unique pseudo-random data.

5. Digital signature (S) calculation method according to one of preceding claims, wherein the specific action (SA) leading to a genuine differentiated signature calculation (S3) is chosen among the groups formed by: a specific biometric acquisition different to the one leading to a genuine straight signature calculation, a specific PIN, a specific validation procedure.

6. Secure device (SD) being adapted to be connected to an acquisition unit (AD) to acquire specific actions (SA) from a user (U), said secure device (SD) further comprising keys (Ks, Kds) and a signature calculation unit (CAL), or being able to be connected to a signature calculation unit, to implement a digital signature (S) method according to one of claims 1 to 5, wherein it comprises at least a differentiator (Kds, DV) to be used by the signature calculation unit (CAL) in the digital signature calculation as soon as a specific action (SA) leading to a genuine differentiated signature calculation (S3) is acquired.

7. Secure device (SD) according to claim 6, wherein the differentiator is a genuine differentiating private key (Kds), distinct from genuine private key (Ks) used to calculate straight signature.

8. Secure device according to claim 6, wherein the differentiator is a differentiating value (DV) incorporated in data (DAT) to be signed before signing using genuine private key (Ks) used to calculate straight signature.
